# EUROPEAN PATENT APPLICATION

(11) **EP 2 105 340 A1**
(43) Date of publication of application: **30.09.2009**
(21) Application number: 08153347.3
(22) Date of filing: 26.03.2008
(51) Int. Cl.: B60K 35/00

(54) **Display device**

(71) Applicant: Ligitek Electronics Co., Ltd., Tucheng City, Taipei County (TW)
(72) Inventor: Huang, Hsiu-Chi, Taipei County (TW); Chen, Han-Che, Taipei County (TW)
(74) Representative: Viering, Jentschura & Partner

(57) **Abstract**

A display device (1) includes a circuit board (20) and a display screen (30). The circuit board (20) includes at least one transmission interface (21), a central processing system (22), and a display interface drive system (23). The transmission interface (21) functions to receive an external signal and a switching instruction and transmitting the received the external signal and switching instruction to the central processing system (22). The central processing system (22) performs processing and computation on the external signal and the switching instruction to output an instruction to the display interface drive system (23) to generate and output a drive instruction for driving a desired mode and image of signal displaying. The display screen (30) is electrically connected to the display interface drive system (23) of the circuit board (20). The display screen (30) functions to display quantified values with a graphic pattern (50), wherein the value displayed in the graphic pattern (50) is obtained from the drive instruction from the display interface drive system (23) for changing the value of the pattern to thereby realize multiple displaying with a single display screen.

## Description

### FIELD OF THE INVENTION

The present invention relates to a display device, and in particular to a combination of a circuit board and a display screen, which receives signals indicating the operation condition of a vehicle, such as driving speed and engine revolution, and processing the signals to display the value carried by the signals on the display screen in a quantified manner and which is capable to change the pattern and value for displaying a desired mode and image of signal displaying, whereby easy recognition, reduced size, and lowered costs can be realized and applications can be made to various vehicles including motorcycle, automobile, and the likes.

### BACKGROUND OF THE INVENTION

An instrument panel or dashboard is an important device for a vehicle, for it provides the operation conditions of the vehicle for the reference of the driver in driving the vehicle. Generally, the operation conditions of a vehicle is obtained through various sensor inside the vehicle body to electrically couple all sorts of information and data related the vehicle operation condition, such as driving speed and engine revolution, to the instrument panel for displaying to the driver, helping the driver to realize the operation conditions of the vehicle.

However, the conventional instrument panel, such as an automobile dashboard, shows the data obtained from a vehicle body sensor, such as tire pressure gauge, in an analog display device with a pointer arm. A general automobile dashboard includes a fuel indicator, a tachometer, a speedometer, and a temperature indicator, so that a driver must search for the desired signal among these instruments and then observe the reading of the associated pointer arm. This certainly delays the response of the driver and often results in overlook of certain immediate signal. Further, the analog pointer arm display mode often requires a lighting device to provide proper lighting thereto at the time when there is insufficiency of in-car lighting or surrounding lighting so that the driver can correctly read the instrument. The lighting device often surfers broken lamp bulb and bulkiness.

In view of the above drawbacks, the present invention is aimed to provide a display device for alleviating the problems.

### SUMMARY OF THE INVENTION

An objective of the present invention is to provide a display device, featuring a combination of a circuit board and a display screen, wherein the display screen uses a graphic pattern to display quantified value and changes patterns to display the desired mode and image of signal displaying, and wherein the graphic pattern can include variation of color to enhance visual recognition and increase identifiability so that the driven can easy realize the operation conditions of a vehicle to thereby enhance driving safety and thus improving practicability of the present invention.

Another objective of the present invention is to provide a display device, featuring a combination of a circuit board and a display screen, wherein the display screen uses a graphic pattern to display quantified value and is provided with the function of changing the display mode of the vehicle operation signal to thereby realize multiple displaying with a single display screen and to further realize reduction of size of display screen and lowering manufacturing costs to improved practicability of the present invention.

A further objective of the present invention is to provide a display device, featuring a combination of a circuit board and a display screen, which allows for driver-initiated manual switching and system-initiated automatic switching of the displaying mode for vehicle operation signals so that the driver may instantaneously handle urgent situations to realize a notification mechanism and reducing traffic accidents and enhancing driving safety and thus improving practicability of the present invention.

To realize the above objectives, in accordance with the present invention, a display device is provided, comprising a circuit board and a display screen. The circuit board includes at least one transmission interface, a central processing system, and a display interface drive system. The transmission interface functions to receive an external signal and a switching instruction and transmitting the received the external signal and switching instruction to the central processing system. The central processing system performs processing and computation on the external signal and the switching instruction to output an instruction to the display interface drive system to generate and output a drive instruction for driving a desired mode and image of signal displaying. The display screen is electrically connected to the display interface drive system of the circuit board. The display screen functions to display quantified values with a graphic pattern, wherein the value displayed in the graphic pattern is obtained from the drive instruction from the display interface drive system for changing the value of the pattern to thereby realize multiple displaying with a single display screen.

### BRIEF DESCRIPTION OF THE DRAWINGS

The present invention will be apparent to those skilled in the art by reading the following description of preferred embodiments thereof with reference to the drawings, in which:

Figure 1 is a perspective view of a display device constructed in accordance with an embodiment of the present invention;

Figure 2 is a perspective view of a display device constructed in accordance with another embodiment of the present invention;

Figure 3 is a system block diagram of the present invention;

Figure 4 is a circuit block diagram of a circuit board of the display device of the present invention;

Figure 5a shows an initial condition of a tachometer mode illustrated in a dual-ring configuration in accordance with the present invention;

Figure 5b shows an in-operation condition of the tachometer mode of the dual-ring configuration in accordance with the present invention;

Figure 6a shows an initial condition of a water temperature indicator mode illustrated in a dual-ring configuration in accordance with the present invention;

Figure 6b shows an in-operation condition of the water temperature indicator mode of the dual-ring configuration in accordance with the present invention;

Figure 7a shows an initial condition of a speedometer mode illustrated in a single-ring configuration in accordance with the present invention;

Figure 7b shows an in-operation condition of the speedometer mode of the single-ring configuration in accordance with the present invention;

Figure 8a shows an initial condition of a speedometer mode illustrated in a dual-strip configuration in accordance with the present invention;

Figure 8b shows an in-operation condition of the speedometer mode of the dual-strip configuration in accordance with the present invention; and

Figure 9 schematically shows an application of the present invention in a vehicle and electrically connected to a head-up display.

### DETAILED DESCRIPTION OF THE PREFERRED EMBODIMENTS

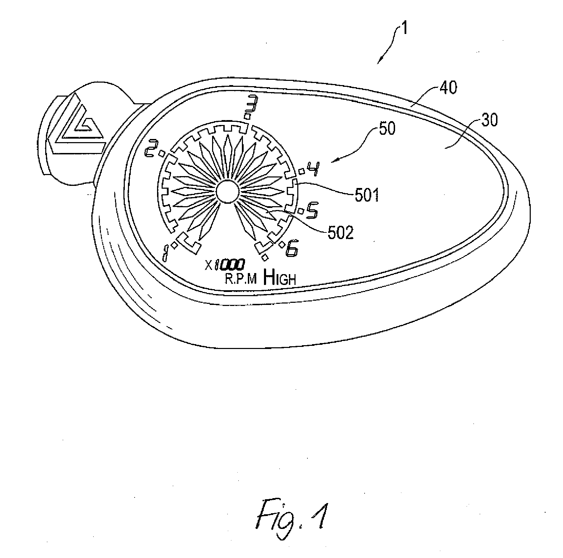

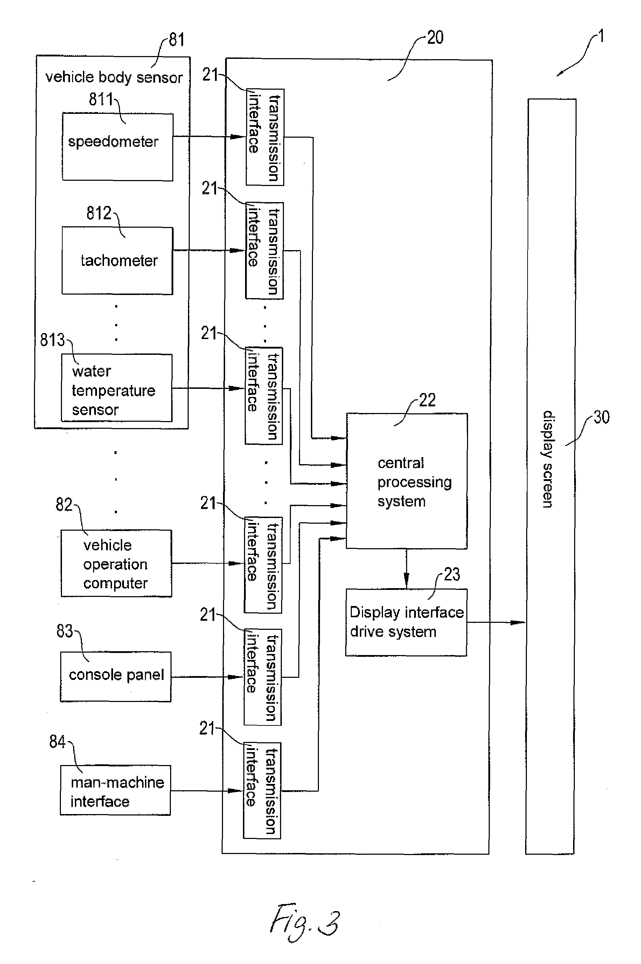

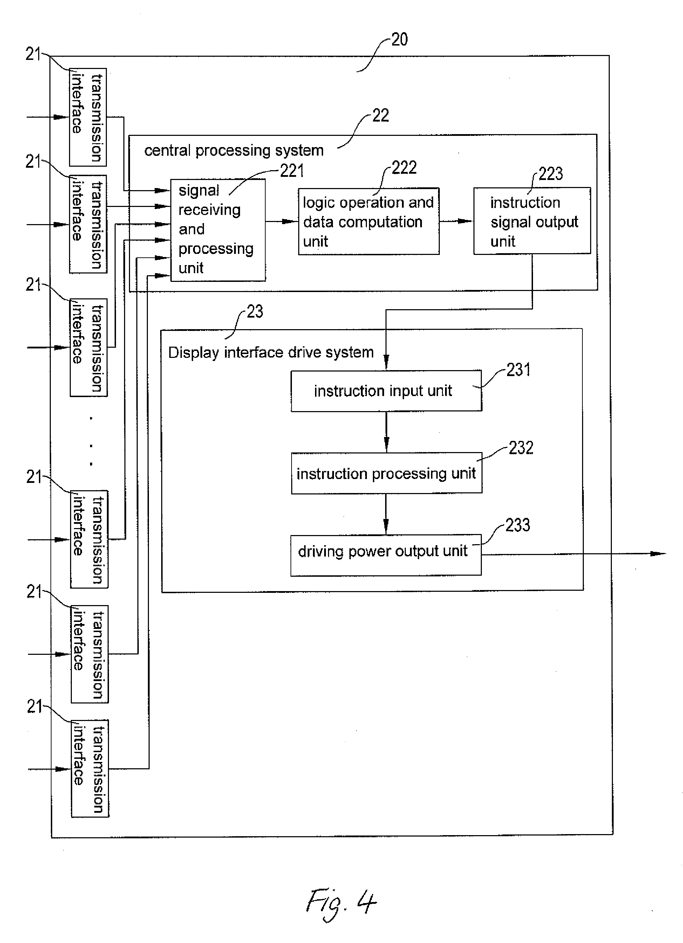

With reference to the drawings and in particular to Figures 1-4, the present invention provides a display device, which is broadly designated at 1. The display device 1 comprises a circuit board 20, which, as shown in Figure 3, comprises at least one transmission interface 21, a central processing system 22, and a display interface drive system 23. The transmission interface 21 serves to receive an external signal and a switching instruction and transmits the received the external signal and the switching instruction to the central processing system 22. The central processing system 22 carries out processes of determination and computation on the external signal and the switching instruction to output an instruction to the display interface drive system 23, which in turn generates and outputs a drive instruction to drive the desired mode and image of signal displaying. The central processing system 22, as shown in Figure 4, comprises a signal receiving and processing unit 221, a logic operation and data computation unit 222, and an instruction signal output unit 223. The signal receiving and processing unit 221 receives the external signal and the switching instruction transmitted from the transmission interface 21 and in turn applies them to the central processing system 22 for processing and computation. The result of the processing and computation is transmitted to the instruction signal output unit 223 to generate an instruction for driving displaying signal. The display interface drive system 23 comprises an instruction input unit 231, an instruction processing unit 232, and a driving power output unit 233. The instruction input unit 231 receives the instruction generated by the operation of the central processing system 22 and transmits the instruction to the instruction processing unit 232. The instruction processing unit 232 carries out a process of determination based on the instruction to generate a drive signal to the driving power output unit 233 for generating and outputting a drive instruction for driving the desired mode and image of signal displaying.

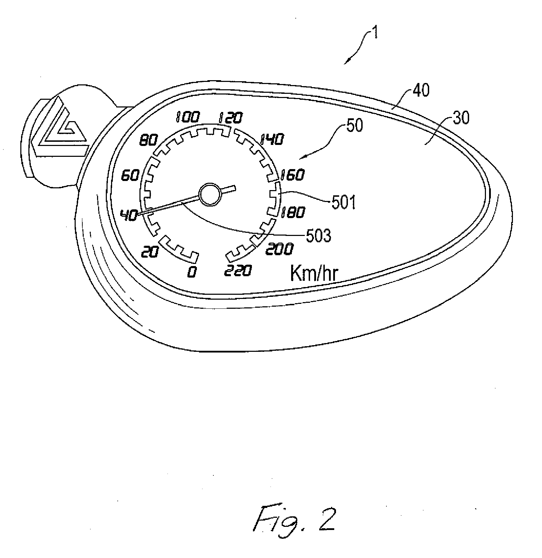

A display screen 30 is connected to the display interface drive system 23 of the circuit board 20. The display screen 30 functions to display quantified value with a graphic pattern 50. The value displayed in the graphic pattern 50 is obtained from the drive instruction from the display interface drive system 23, which is converted into the value displayed in the graphic pattern 50 for showing with the desired mode and image of signal displaying. The graphic pattern 50 can consist of a signal pattern or a plurality of sub-patterns to display the value of the signal to be display in a quantified manner. In the example shown in Figure 2, a single pattern 501 resembling an analog indicator is shown to display scales and numbers, which work with an analog pointer arm 503. On in another example shown in Figure 1, two sub-patterns is used, arranged in the form of internal and external dual rings, of which the external ring shows scales and numbers 501, while the internal ring shows a pointer-based quantification patter 502. The display screen 30 can be a liquid crystal display (LCD), an organic light-emitting diode (OLED) display, or a light-emitting diode (LED) display; or it can be other types of display, such as an electroluminescent (EL) device, a vacuum fluorescent display (VFD), a polymer light-emitting diode (PLED) display, a low-temperature poly-silicon liquid crystal display (LTPS-LCD), an electroluminescent display (ELD), a field-emission display (FED), and plasma display panel (PDP). The graphic pattern 50 of the display screen 30 can display one of the following modes of signal displaying: engine temperature indicator mode, speedometer mode, fuel indicator mode, water temperature indicator mode, water level indicator mode, voltmeter mode, tire pressure gauge mode, oil temperature indicator mode, and battery capacity indicator mode, and can be switched among these modes in a manual or automatic operation manner, whereby the display screen 30 can be of a multiple indication gauge display by means of the displaying realized by the graphic pattern 50.

Referring to Figure 3, the external signal that is to be received by the transmission interface 21 of the circuit board 20 can be a signal from a vehicle body sensor 81, which is for example arranged inside the vehicle body to detect and obtain numerical data of the operation condition of the vehicle, or a vehicle operation computer 82, which is arranged inside the vehicle body and connected to various vehicle body sensors 81, or a console panel 83 of the vehicle body, which is arranged inside the vehicle body to receive and display various signals detected by various sensors 81 inside the vehicle body, of a vehicle, such as an automobile, a motorcycle, a truck, and a bus (an automobile being taken as an example herein for description). The vehicle body sensor 81 can be for example a speedometer 811, a tachometer 812, a water temperature sensor 813, an engine temperature sensor, a fuel indicator, a water level sensor, a voltmeter, a tire pressure gauge, an oil temperature sensor, and a battery capacity sensor. In practical applications, the transmission interface 21 of the circuit board 20 is electrically connected to one or more vehicle body sensors/gauges 81 to receive various signals obtained from the vehicle body. The drive instruction provided by the driving power output unit 233 of the circuit board 20 is a voltage signal for driving the operation of the display screen 30 to make the display screen 30 displaying the desired mode and image of signal displaying. The switching instruction received by the transmission interface 21 is an instruction entered from an external man-machine interface 84, which is an instruction that a vehicle driver, based on the vehicle signal that he or she wishes to observe, manually switches the desired mode of signal displaying, and transmitted to the central processing system 22 for determination and operation to thereby switch the graphic pattern 50 of the display screen 30 to desired displaying of the corresponding scales and numbers 501 and pointer-based quantification pattern 502 (or analog pointer arm 503). On the other hand, the automatic switching operation for switching the signal displaying mode is that the central processing system 22 receives an external signal and carries out processing and determination of the signal to determine it is an urgent situation that the driver must be informed of. For example, the transmission interface 21 receives a signal transmitted from the water temperature sensor 813 of the vehicle body sensor 81 and transmits the signal to the central processing system 22 and the central processing system 22, after processing the signal, determines that the water temperature approaches a critical or threshold value, namely determining the water temperature is too high, and under such a condition, the central processing system 22 automatically generates a switching signal to automatically switch the graphic pattern 50 of the display screen 30 to a mode for displaying the related information and data, such as the water temperature indicator mode, whereby the graphic pattern 50 of the display screen 30 is switched to the corresponding scales and numbers 501 and the pointer-based quantification pattern 502 (or analog arm 503) to display the signal to be displayed, such as the water temperature mode and the image thereof.

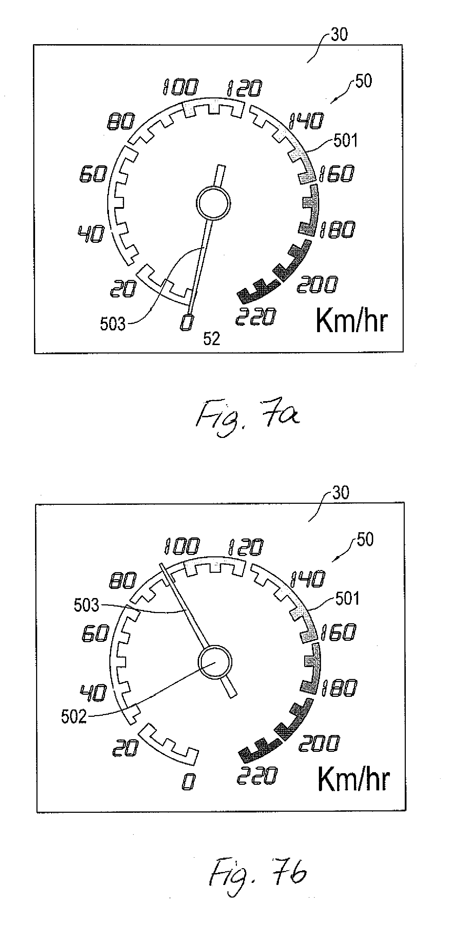

With reference to Figures 2, 7a and 7b, a speedometer mode is shown in the display screen 30, wherein the graphic pattern 50 of the display screen 30 uses a single pattern to quantify the value to be displayed and shown in a ring-like pattern. The ring shows the scales and numbers 501 of the graphic pattern 50, which work with an analog pointer arm 503. The single pattern can be configured as a ring, such as that shown in Figures 2, 7a, and 8b, or a strip (not shown). Further, as shown in Figures 1, 5a-6b, 8a, and 8b, the graphic pattern 50 of the display screen 30 uses multiple sub-patterns, such as the dual patterns that are taken an example herein for explanation, to quantify the value of the signal to be displayed. The dual patters can be for example dual rings, dual strips and the likes to indicate the information/data related to the vehicle. When the dual rings are used to serve as the dual patterns, namely a dual-ring configuration in the embodiment illustrated, as shown in Figures 1, 5a, 5b, 6a and 6b, and are arranged as a configuration of internal and external rings, the outer ring can be the scales and numbers 501, while the internal ring is a pointer-based quantification pattern 502.

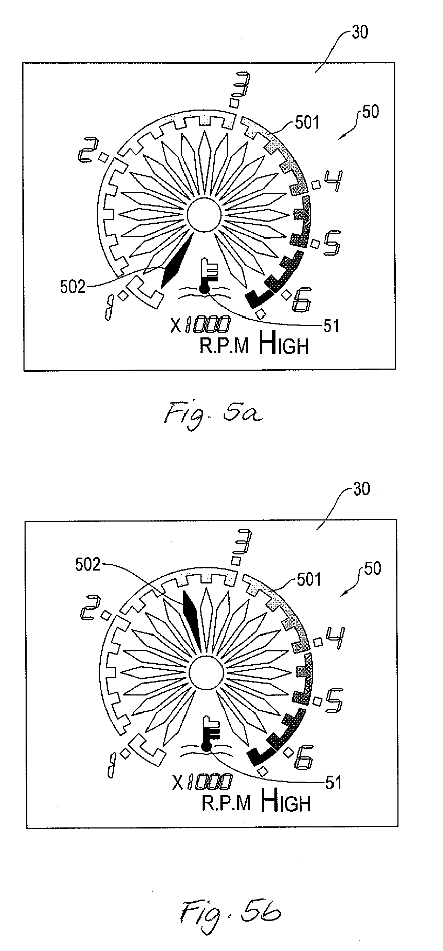

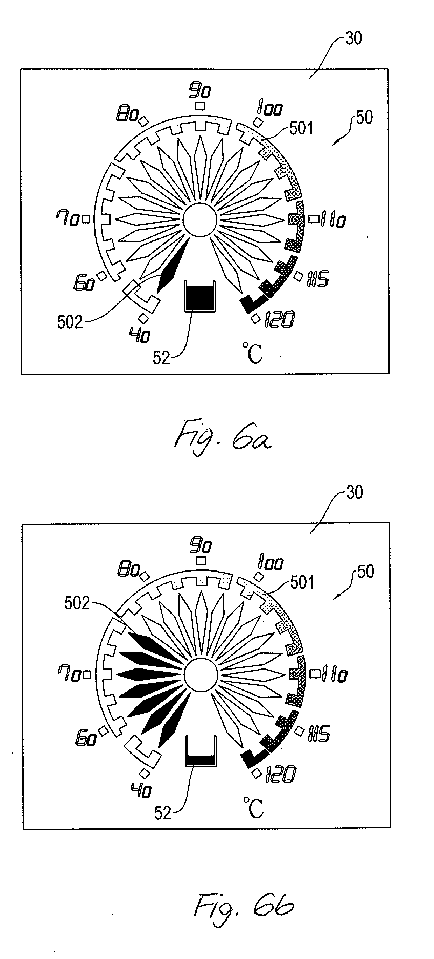

Since the vehicle conditions of a moving vehicle change from time to time, the transmission interface 21 continuously receives external signals, which are transmitted to the central processing system 22 for processing and computation and the display interface drive system 23 is caused to generate and output the drive instruction. The display screen 30 bases on the drive instruction of the display interface drive system 23 to switch the graphic pattern 50 to display the value of the current signal. The switching for the graphic pattern 50 adapting dual patterns can be that the pointer-based quantification patter 502 generates changes of position or color, and the pointer-based quantification pattern 502 adapts single indication fashion, such as that shown in Figures 5a and 5b, and displays a single color mark pointing to the corresponding scales and numbers 501, or the pointer-based quantification pattern 502 can be of accumulative pointing fashion, such as that shown in Figures 6a and 6b, and is based on the drive instruction of display interface drive system 23 and uses increase of color marks to point to the corresponding scales and numbers 501.

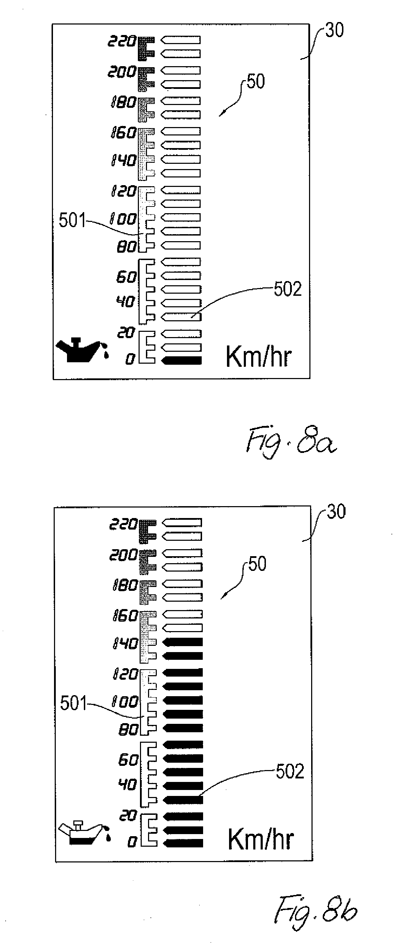

Further, as shown in Figures 8a and 8b, a dual-strip speedometer mode is shown. The graphic pattern 50 shown in the display screen 30 adapts dual patterns and displayed in a dual-strip configuration, of which one strip displays scales and numbers 501, while the other strips shows the pointer-based quantification pattern 502. When the graphic pattern 50 is dual strips, they can be two horizontal strips (not shown) or two vertical strips as shown in Figures 8a and 8b. The pointer-based quantification pattern 502 is of a single indication fashion, which bases on the drive instruction of the display interface drive system 23 and is displayed in a single color mark pointing to the scales and numbers 501 (not shown) or an accumulative pointing fashion, as shown in Figures 8a and 8b, using increase of color marks to point to the corresponding scales and numbers 501.

As shown in Figures 5a and 5b, the graphic pattern 50 of the display screen 30 shows a tachometer mode and is displayed with dual patterns of a dual ring configuration. The external ring is scales and numbers 501, while the internal ring is pointer-based quantification pattern 502. The variation of the vehicle engine revolution is shown in a single mark fashion by the pointer-based quantification pattern 502, using color mark to point to the position in the scales and numbers 501 that represents the current engine revolution. In other words, among the marks that constitute the pointer-based quantification pattern 502, the one mark that corresponds to the position of the scales and numbers 501 that represents the current engine revolution shows color or is lit, while the remaining marks show no color or are not lit. The way of showing pointing or indication is similar to that of Figures 7a and 7b, namely a single pattern (single ring) working with an analog arm 503 to indicate the starting and operation condition of the tachometer.

Although dual patterns (the dual ring configuration) and a single indication are used to show the engine revolution speed, but in an actual application, the accumulative pointing fashion can be instead used, such as the dual ring configuration used in Figures 6a and 6b for showing water temperature gauge mode. The variation of water temperature is shown with the pointer-based quantification pattern 502 of the graphic pattern 50 in an accumulative pointing fashion, with the increase of color mark pointing to the position of the scales and numbers 501 that represents the current water temperature. In other words, the pointer-based quantification pattern 502 shows color or light from an initial position mark to the mark corresponding to the position of the scales and numbers 501. Further, the dual ring configuration of the dual patterns of Figures 5a and 5b can be replaced with the dual vertical strip configuration of the dual patterns of Figures 8a and 8b or other configuration to show the desired mode and image of signal displaying. Referring again to Figures 5a-8b, the scales and numbers 501 of the graphic pattern 50 of the display screen 30 can be of a design that shows variation of color to enhance the identifiability of signal. For example, the scales and numbers 501 of the outer ring in a dual-ring gauge can be divided into normal zone and warning zone by using different colors.

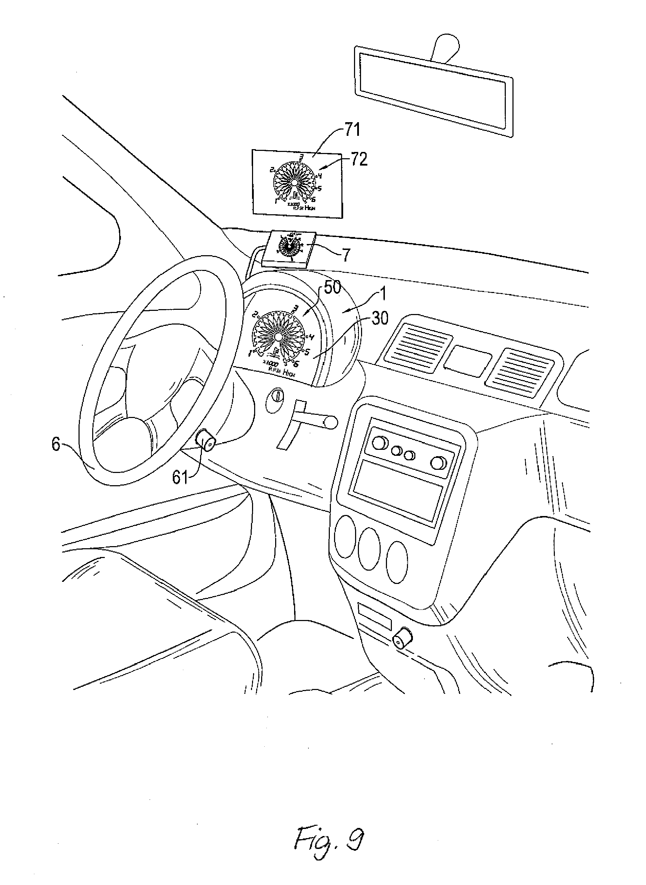

The display screen 30 uses the graphic pattern 50 to show quantified value for realizing the desired mode and image of signal displaying. In the meanwhile, a symbol can be added at a suitable location on the display screen 30 to indicate the vehicle condition signal related to the signal displaying mode that is currently displayed, such as the symbol 51 that indicates the water temperature shown in the tachometer mode as shown in Figures 5a and 5b, whereby a driver can get roughly aware of other vehicle conditions while observing the tachometer signal, for example inspecting the rough value of water temperature with the symbol 51. When the driver attempts to get detail of the signal indicated by the symbol 51, the man-machine interface 84 is operated to manually enter a switching instruction, see Figure 3 and a switching instruction input terminal 61 shown in Figure 9, whereby the display screen 30 is driven to switch the signal displaying mode, such as switching to the water temperature gauge mode shown in Figures 6a and 6b. It is noted that in the water temperature gauge mode shown in Figures 6a and 6b, a symbol 52 indicating water level is also shown. In this way, the burden of a driver to simultaneously observe multiple meters or gauges on the same instrument panel, namely the same display screen 30, can be reduced and the size of the instrument panel, namely the display screen 30 can be reduced and the manufacturing costs are thus lowered.

In addition, the display device 1 of the present invention can further comprise a casing 40, as shown in Figures 1 and 2, to house the circuit board 20 and the display screen 30 therein. The display screen 30 is arranged between the casing 40 and the circuit board 20 and is exposed through a front surface of the casing 40 to allow for observation of the signal displayed. One of the transmission interfaces 21 is exposed outside for connection with the vehicle body sensors 81, the vehicle operation computer 82, the console panel 83 and the man-machine interface 84, whereby the display device 1 of the present invention can be easily mounted to the vehicle by means of the casing 40. For example, the casing 40 can be installed in front of the steering wheel and located between the steering wheel and the windshield. Or the casing 40 can be mounted to other types of vehicle, such as a handlebar of a motorcycle. The circuit board 20 and the display screen 30 can be provided wit separate casings (not shown) and the circuit board 20 and display screen 30 are then further and electrically connected. In addition, the display device 1 of the present invention can be further provided with ha sensor (not shown), which is electrically connected to the transmission interface 21 of the circuit board 20 to allow the display device 1 of the present invention to receive an external signal from for example a global positioning system (GPS).

Referring to Figures 1-9, the present invention features a combination of a circuit board 20 ad a display screen 30 and the display screen 30 uses a graphic pattern 50 to display quantified values and changes the value of the graphic pattern 50 to show desired mode and image of signal displaying for enhancing signal identifiability and allowing the driver to easily understand the vehicle conditions to provide references for operating vehicles and thereby improving driving safety. By further providing the capability of switching displaying modes of the vehicle signal, the graphic pattern 50 of the display screen 30 can be switched in accordance with the signal displaying mode to change the scales and numbers 501 and pointer-based quantification pattern 502 (or analog arm 503) of the graphic pattern 50 to realize multiple displaying with a single display screen 30 by means of the graphic pattern 50 and thereby reduce the size and manufacturing costs of the display screen 30.
With the signal displaying mode that can be shown by the graphic pattern 50 of the display screen 30 including tachometer mode, engine temperature indicator mode, speedometer mode, fuel indicator mode, water temperature indicator mode, water level indicator mode, voltmeter mode, tire pressure gauge mode, oil temperature indicator mode, and battery capacity indicator mode, in addition to providing the driver with the function of manually switching to the vehicle signal displaying mode in which the desired signal is displayed, an automatic system (the central processing system 22) switching displaying mode is provided so that when the system (the central processing system 22) detects the conditions of speeding, low fuel level, and high water temperature reaching a threshold value, the system (the central processing system 22) gives off a switching instruction to the display screen 30 so that the graphic pattern 50 of the display screen 30 immediately switch to the displaying mode for the related signal to notify the driver, whereby the driver can make an immediate response. In this way, a mechanism for enhancing driving safety and reducing traffic accidents is realized. Further, the graphic pattern 50 of the display screen 30 can be of a single pattern fashion or a multiple pattern fashion for showing the value of signal. When a single pattern configuration is adapted, scales and numbers 501 work with analog arm 503 for signal displaying. When a multiple pattern configuration, such as dual patterns, is adapted, the scales and numbers 501 and the pointer-based quantification pattern 502 are used for signal displaying. The multiple patterns, such as the dual patterns, can be a dual ring configuration or a dual strip configuration, wherein the indication of the pointer-based quantification pattern 502 can be of single indication or accumulative pointing. The graphic pattern 50 can be of color variation in accordance with the signal displayed to further enhance the signal identifiability. To this point, apparently, the display device 1 of the present invention provides the advantages of enhancing signal identifiability, reducing overall size, lowering manufacturing costs, and including a notifying mechanism to thereby reduce traffic accidents and enhance driving safety, and therefore enhancing practicability and convenience.

Referring to Figure 9, an application of the present invention in an automobile is shown. The display screen 30 is electrically connected to a head-up display (HUD) 7 to project the image displayed with the graphic pattern 50 of the display screen 30 onto a projection displaying zone 71 on the front windshield of the automobile. In driving, the driver does not need to lower and switch his or her eyesight from the frontward road situation to the display device 1 inside the instrument panel in front of the steering wheel 6 and the driver can watch only a projected signal 72 on the projection displaying zone 71 of the windshield to get aware of the current vehicle conditions, such as speed and engine revolution, whereby driving safety can be further enhanced. In addition, in actual practice, the switching instruction input terminal 61 of the man-machine interface 84 (see Figure 3) can be arranged on the steering wheel 6 to allow the driver to conveniently and manually switch to the desired displaying mode for the desired signal, such as the driving speed or the engine revolution to thereby enhance the practicability and convenience of the present invention.

Although the present invention has been described with reference to the preferred embodiments thereof, it is apparent to those skilled in the art that a variety of modifications and changes may be made without departing from the scope of the present invention which is intended to be defined by the appended claims.

## Claims

1. A display device (1), comprising:
a circuit board (20), comprising at least one transmission interface (21), a central processing system (22), and a display interface drive system (23), the transmission interface (21) adapted to receive an external signal and a switching instruction and transmitting the received the external signal and switching instruction to the central processing system (22), the central processing system (22) performing processing and computation on the external signal and the switching instruction to output an instruction to the display interface drive system (23) to generate and output a drive instruction for driving a desired mode and image of signal displaying, and
a display screen (30), electrically connected to the display interface drive system (23) of the circuit board (20), the display screen (30) displaying quantified values with a graphic pattern (50), wherein the value displayed in the graphic pattern (50) is obtained from the drive instruction from the display interface drive system (23) for changing the value of the pattern to thereby realize multiple displaying with a single display screen.

2. The display device as claimed in Claim **1,** wherein the graphic pattern (50) of the display screen (30) comprises dual patterns, which are shown as a dual-ring configuration, having an external ring illustrating scales and numbers (501) and an internal ring illustrating a pointer-based quantification pattern (502).

3. The display device as claimed in Claim **1,** wherein the graphic pattern (50) of the display screen (30) comprises dual patterns, which are shown as a dual-strip configuration, having a first strip illustrating scales and numbers (501) and a second strip illustrating a pointer-based quantification pattern (502).

4. The display device as claimed in Claim **2,** wherein the pointer-based quantification pattern (502) is of a single indication fashion using a single color mark to point to a corresponding position in the scales and numbers.

5. The display device as claimed in Claim **3,** wherein the pointer-based quantification pattern (502) is of a single indication fashion using a single color mark to point to a corresponding position in the scales and numbers.

6. The display device as claimed in Claim **2,** wherein the pointer-based quantification pattern (502) is of an accumulative pointing fashion, which uses increases of color marks to point to a corresponding position in the scales and numbers.

7. The display device as claimed in Claim **3,** wherein the pointer-based quantification pattern (502) is of an accumulative pointing fashion, which uses increases of color marks to point to a corresponding position in the scales and numbers.

8. The display device as claimed in Claim **1,** wherein the graphic pattern 950) of the display screen (30) comprises a single ring configuration, which illustrates scales and numbers (501), and which works with an analog arm pointer (503).

9. The display device as claimed in Claim **1,** wherein the graphic pattern (50) of the display screen (30) comprises a single strip configuration, which illustrates scales and numbers (501), and which works with an analog arm pointer (503).

10. The display device as claimed in Claim **1,** wherein the mode of signal displaying is selected from a group consisting of tachometer mode, engine temperature indicator mode, speedometer mode, fuel indicator mode, water temperature indicator mode, water level indicator mode, voltmeter mode, tire pressure gauge mode, oil temperature indicator mode, and battery capacity indicator mode, among which the mode is switchable in a manual or automatic manner.

11. The display device as claimed in Claim **1,** wherein the transmission interface (21) of the circuit board (20) receives the external signal from a vehicle body sensor (81).

12. The display device as claimed in Claim **11,** wherein the vehicle body sensor (81) is selected from a group consisting of a tachometer, an engine temperature sensor, a speedometer, a fuel indicator, a water temperature sensor, a water level sensor, a voltmeter, a tire pressure gauge, an oil temperature sensor, and a battery capacity sensor.

13. The display device as claimed in Claim **1,** wherein the transmission interface (21) of the circuit board (20) receives the external signal from a vehicle operation computer (82).

14. The display device as claimed in Claim **1,** wherein the transmission interface (21) of the circuit board (20) receives the external signal from a console panel (83) of a vehicle.

15. The display device as claimed in Claim **1,** wherein the transmission interface (21) of the circuit board (20) receives the switching instruction entered through a man-machine interface (84).

16. The display device as claimed in Claim **1,** wherein the central processing system (22) comprises a signal receiving and processing unit (221), a logic operation and data computation unit (222), and an instruction signal output unit (223), the signal receiving and processing unit (221) receiving the external signal and the switching instruction transmitted from the transmission interface (21) and in turn applying the external signal and the switching instruction to the central processing system (22) for processing and computation of which a result is transmitted to the instruction signal output unit (223) to generate an instruction for driving displaying signal.

17. The display device as claimed in Claim **1,** wherein the display interface drive system (23) comprises an instruction input unit (231), an instruction processing unit (232), and a driving power output unit (233), the instruction input unit (231) receiving an instruction generated by operation of the central processing system (22) and transmitting the instruction to the instruction processing unit (232), the instruction processing unit (232) performing a determining process on the instruction to generate a drive signal to the driving power output unit (233) for generating and outputting a drive instruction for driving a desired mode and image of signal displaying.

18. The display device as claimed in Claim **1,** wherein the display screen (30) comprises a liquid crystal display.

19. The display device as claimed in Claim **1,** wherein the display screen (30) comprises an organic light-emitting diode display.

20. The display device as claimed in Claim **1,** wherein the display screen (30) comprises a light-emitting diode display.

21. The display device as claimed in Claim **1,** wherein the display screen (30) is electrically connected to a head-up display (7) for projecting the graphic pattern (50) of the display screen (30) to a front windshield of a vehicle.
